# EUROPÄISCHE PATENTANMELDUNG

(11) **EP 1 330 053 A2**
(43) Veröffentlichungstag der Anmeldung: **23.07.2003**
(21) Anmeldenummer: 03100086.2
(22) Anmeldetag: 17.01.2003
(51) Int. Cl.: H04B 10/12

(54) **Anordnung und Verfahren zur Bereitstellung von Übertragungskapazität auf einer Datenübertragungsstrecke**

(30) Priorität: 21.01.2002 DE 10202142
(71) Anmelder: SIEMENS AKTIENGESELLSCHAFT, 80333 München (DE)
(72) Erfinder: Rasztovits-Wiech, Michael, 1170, Wien (AT)

(57) **Zusammenfassung**

Bei dieser Anordnung und den dazugehörigen Verfahren wird eine Bereitstellung einer Datenübertragungskapazität bezogen auf den Benutzer auf einer Übertragungsstrecke durch Begrenzungseinheiten durchgeführt.

## Beschreibung

Diese Erfindung betrifft eine Anordnung sowie dazugehörige Verfahren zum Bereitstellen von einer Datenübertragungskapazität auf einer zwischen mindestens einer Sendeeinheit und Empfangseinheit angeordneten Datenübertragungsstrecke.

Telekommunikations-Festnetzbetreiber mit eigenen Übertragungsmedien, wie beispielsweise Glasfaserkabeln, nützen nicht immer alle ihnen zur Verfügung stehenden Übertragungsmedien insbesondere Übertragungsleitungen. Nicht benutzte Übertragungskapazitäten bei Glasfasern können dann beispielsweise an Dritte vermietet werden. Auf einer nicht durch Übertragungseinrichtungen terminierten Glasfaser-Übertragungsstrecke, im folgenden auch als dark fiber genannt, kann beispielsweise eine Übertragungskapazität von 1,6 Tbit/s bei Monomodefasern erreicht werden.

Der Erfindung liegt die Aufgabe zugrunde, eine Anordnung und ein Verfahren gegen den Missbrauch von freien Datenübertragungskapazitäten eines Übertragungsmediums anzugeben.

Die Lösung der Aufgabe ergibt sich aus den Merkmalen der Ansprüche 1 und 6.

Die Erfindung bringt den Vorteil mit sich, dass eine Begrenzung der Datenübertragungskapazität je nach den Erfordernissen eines Mieters erfolgt und dadurch ein leistungsgerechter Mietpreis festsetzbar ist.

Die Erfindung bringt den Vorteil mit sich, dass sie durch einfache Mittel erreichbar ist.

Weitere Besonderheiten sind in den Unteransprüchen angegeben.

Die Anordnung und das Verfahren zur Begrenzung der Übertragungskapazität werden in einer nachfolgenden näheren Erläuterung zu Ausführungsbeispielen anhand von Zeichnungen ersichtlich.

Es zeigen:
- Figur 1: ein Blockschaltbild mit einer Begrenzereinheit,
- Figur 2: eine weitere Ausgestaltung einer in eine Glasfaserübertragungsstrecke eingebauten Begrenzereinheit und
- Figur 3: eine weitere Ausgestaltung einer in eine Glasfaserübertragungsstrecke integrierten Begrenzereinheit.

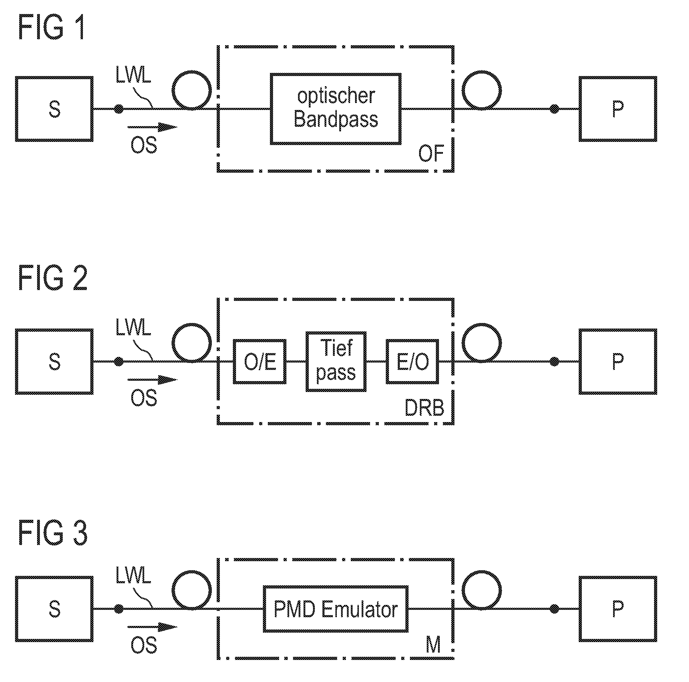

Figur 1 zeigt ein Blockschaltbild mit einer gezielten Begrenzung der optischen Bandbreite. Bei diesem Ausführungsbeispiel wird in eine Glasfaserübertragungsstrecke ein optisches Filter OF geschaltet, so dass die optische Übertragung auf einen bestimmten Wellenlängenbereich eingeschränkt bzw. ein Wellenlängenmultiplexbetrieb verhindert wird. Diese Ausführungsform kann zur Verhinderung eines dense wavelength division multiplex DWDM-Betrieb verwendet werden. Bei Glasfasern existieren mehrere sogenannte optische Fenster in denen eine Datenübertragung möglich ist.

Bei Monomodeglasfasern sind es beispielsweise:

| | | |
|---|---|---|
| O-Band | original band | 1310+/-50nm |
| E-Band | | 1410+/-50nm |
| S-Band | short band | 1490+/-30nm |
| C-Band | conventional band | 1530 - 1565nm |
| L-Band | long-wavelength | 1575 - 1610nm |

Unterhalb des O-Bandes und oberhalb des L-Bandes ist die Dämpfung der Glasfaser so hoch, dass eine Ausnutzung nur bei kurzen Übertragungslängen möglich wäre.

In einer Mehrheit von Fällen wird das O-Band zur Übertragung genützt. Für viele Applikationen sind für Monomodefasern nur optische Schnittstellen für das O-Band wie beispielsweise bei einem Gigabit-Ethernet standardisiert.

Bei Mehrwellenbetrieb auf optischen Glasfasern werden Signale mit unterschiedlich optischer Mittenfrequenz (Wellenlänge) gleichzeitig auf einer Glasfaser transportiert. Jede Wellenlänge transportiert einen sogenannten Kanal, wobei die Kanäle vollkommen unabhängige Signale transportieren. Am Ende der Glasfaserstrecke werden die Kanäle mit Hilfe von optischen Filtern getrennt. Dabei unterscheidet man folgende Arten von Wellenlängenmultiplexbetrieben:
- WDM: wavelength division multiplex: z.B. je ein Kanal im O-Band und im C-Band werden gleichzeitig übertragen.
- CWDM: Coarse WDM (grob WDM), von O- bis L-Band werden insgesamt einige Kanäle gleichzeitig übertragen.
- DWDM: viele Kanäle im C- und L- Band werden gleichzeitig übertragen, derzeit ca. je 80 Kanäle pro Band, Kanalabstand 50GHz (ca. 0,4nm).

Die in der Figur 1 gezeigte Begrenzereinheit verwendet optische Filter womit der oben aufgeführten Wellenlängenmultiplexbetrieb WDM, CWDM und WDM auf dark fiber Glasfaserstrecken beschränkt werden kann.

In Figur 2 ist in eine optische Glasfaserübertragungsstrecke LWL eine Schaltungsanordnung zur Begrenzung der Datenrate auf einer Glasfaserübertragungsstrecke eingefügt. Diese Schaltungsanordnung weist einen Bandbreitenbegrenzer bestehend aus einem Photoempfänger der das übertragene Signal in das elektrische Basisband umsetzt, einen Bandbreitenbegrenzer realisiert durch z.B. elektrische Tiefpass- oder Bandpassfilterung und einem Sender, der das bandbreitenbegrenzte Signal wieder mithilfe eines Lasers aussendet auf. Anstatt der zusätzlichen elektrischen Filterung kann auch ein schmalbandiger Photoempfänger oder Sender verwendet werden.

Am Eingang des Datenratenbegrenzers DRB in Fig.2 sitzt ein optischer Photodetektor, beispielsweise ein O/E Konverter. Der Verlauf der optischen Leistung der Einhüllenden des Lichtsignals wird in einen Photostrom, und damit in ein elektrisches Signal abgebildet. Zeitsignal und Spektrum dieses elektrischen Signals entsprechen nun qualitativ wieder annähernd bis auf Ungenauigkeiten der Abbildung des Modulators und des Empfängers, sowie Verzerrungen auf der Glasfaserstrecke dem Modulationssignal im Sender. Wird dieses elektrische Signal nun z.B. durch ein elektrisches Tief- oder Bandpassfilter in seiner Bandbreite begrenzt, treten Verzerrungen auf, die umso größer sind je größer das Verhältnis der übertragenen Datenrate zu der oberen Grenzfrequenz des elektrischen Filters ist. Das verzerrte, elektrische Signal wird mit einem optischen Sender beispielsweise gebildet durch einen E/O Konverter, wieder auf die Glasfaserstrecke gelegt. Infolge der Verzerrungen steigt die Bitfehlerwahrscheinlichkeit am Photoempfänger am Ende der Glasfaserstrecke an und damit wird bei entsprechender Wahl der oberen Grenzfrequenz des elektrischen Filters im Bandbreitenbegrenzer, das übertragene Signal unbrauchbar.

Die Wahl der oberen Grenzfrequenz des elektrischen Filters in dem Datenratenbegrenzer DRB hängt im Wesentlichen davon ab welche maximale Datenrate vertraglich vereinbart wurde und bei welcher Datenrate die Sperre verlässlich wirken soll. Da ein Signal mit der vereinbarten Datenrate nicht verzerrt werden soll, ist die Bandbreite des Filters nicht zu schmalbandig zu wählen.

Ein Vorteil dieser Schaltungsausgestaltung liegt in der Begrenzung auf eine relativ niedrige Datenrate bis zu etwa einem Gbit/s. Ein weiterer Vorteil dieses Datenratenbegrenzers DRB liegt darin, dass ein Wellenlängenmultiplexbetrieb verhinderbar ist.

Weitere Varianten dieser in Figur 2 gezeigten Ausführungsvariante könnte der art sein, dass der Bandbegrenzer bei den erlaubten Datenraten als 2R oder 3R Regenerator und damit signalverbessernd wirkt. Insbesondere kann auch ein Bandbreitenbegrenzer eine Power-tracking funktion haben, d.h. die Ausgangsleistung wird immer nach der Eingangsleistung eingestellt, dadurch gibt es keine Verfälschung des Pegelplans der Glasfaserstrecke.

In der in Figur 3 gezeigten Ausführungsvariante wird als Datenratenbegrenzer ein PMD-Emulator verwendet. Dieser PMD-Emulator wird insbesondere bei LWL mit Monomodeglasfasern verwendet. In einer Monomodeglasfaser sind 2 linear polarisierte Grundmoden ausbreitungsfähig die zueinander orthogonal polarisiert sind. Ist die Zylindersymmetrie der Faser ideal gegeben, dann sind diese Moden degeneriert, d.h. sie haben die gleiche Ausbreitungsgeschwindigkeit. Jeder Polarisationszustand in der Faser kann nun durch eine Superposition dieser beiden Moden beschrieben werden. Bedingt durch die möglichen Ungenauigkeiten bei der Herstellung einer Glasfaser oder auch bei Krümmungen bzw. mechanischem Druck auf die verlegte Faser ist die zuvor angesprochene Zylindersymmetrie der Faser nicht gegeben. Die Ausbreitungsgeschwindigkeit der beiden Moden ist nun unterschiedlich, die Faser wird doppelbrechend, und bei langen Glasfaserstrecken kann der relative Gruppenlaufzeitunterschied, differential group delay, die Größenordnung einer Bitdauer des Übertragungssignals erreichen. Dies führt zur Verbreiterung der übertragenen Pulse und damit zu einer Signalverzerrung. Diesen Effekt nennt man Polarisationsmodendispersion PMD und ist ein unerwünschter Effekt der insbesondere bei hohen Datenraten also ab 10 Gbits/s auftritt.

Die Verzerrung des Signals ist nicht nur von der Größe des Gruppenlaufzeitunterschieds abhängig, sondern auch von dem Verhältnis der optischen Leistung in den beiden Moden. Die doppelbrechenden Eigenschaften der Glasfaserstrecke ändern sich jedoch im Verlauf der Strecke, nicht zuletzt deshalb weil die Strecke aus einer Anzahl gespleisster Fasern besteht.

Bei diesem in Figur 3 gezeigten Ausführungsbeispiel wird in die optische Übertragungsstrecke insbesondere bei der Verwendung von Monomodeglasfasern ein Modul M zur Polarisationsmodendispersion eingefügt, so das eine Bandbreitenbeschränkung entsprechend den Vermietungskonditionen des Festnetzbetreibers ermöglicht wird. Da die natürliche Modendispersion der Faser nicht ausreicht wird eine künstliche Polarisationsmodendispersion in dem in Figur 3 gezeigten Modul erzeugt. Diese zur Einschränkung der Bandbreite erzeugte Polarisationsmodendispersion könnte z.B. mithilfe von polarisationserhaltender Faser oder diskreter doppelbrechender Elemente erreicht werden.

## Patentansprüche

1. Anordnung zum Bereitstellen von einer Datenübertragungskapazität auf einer zwischen mindestens einer Sendeeinheit und Empfangseinheit angeordneten Datenübertragungsstrecke,
**dadurch gekennzeichnet,**
**dass** mindestens eine Begrenzungseinheit (OF, DRB, M) zwischen der Sendeeinheit (S) und der Empfangseinheit (P) vorgesehen ist, wobei der Begrenzungseinheit (OF, DRB, M) einen zwischen der Sendeeinheit (S) und der Empfangseinheit (P) ausgetauschter Datenstrom zugeleitet wird und die Begrenzungseinheit die Datenübertragungskapazität benutzerbezogen eingrenzt.

2. Anordnung nach Anspruch 1,
**dadurch gekennzeichnet,**
**dass** die Datenübertragungsstrecke durch mindestens eine Glasfaserleitung gebildet ist.

3. Anordnung nach Anspruch 2,
**dadurch gekennzeichnet,**
**dass** die Begrenzungseinheit(OF) ein optisches Filter ist, wobei der Wellenlängenbereich des Durchlassbandes des Filters benutzerindividuell eingrenzbar ist.

4. Anordnung nach Anspruch 2,
**dadurch gekennzeichnet,**
**dass** die Begrenzungseinheit (DRB) mit
einem das optische Übertragungssignal in das elektrische Basisband umsetzenden Photoempfänger,
einem elektrischen Breitbandbegrenzer und
einem Elektro-Optischen Umsetzer,
ausgebildet ist.

5. Anordnung nach Anspruch 2,
**dadurch gekennzeichnet,**
**dass** die Begrenzungseinheit (M) ein Polarisationsmodendispersions-Emulator ist.

6. Verfahren zum Bereitstellen von einer Datenübertragungskapazität auf einer zwischen mindestens einer Sendeeinheit und Empfangseinheit angeordneten Datenübertragungsstrecke,
**dadurch gekennzeichnet,**
**dass** der auf der Datenübertragungsstrecke ausgetauschte Datenstrom benutzerbezogen eingegrenzt wird.

7. Verfahren nach Anspruch 6,
**dadurch gekennzeichnet,**
**dass** Wellenlängen des Datenstromes benutzerbezogen eingrenzbar sind.

8. Verfahren nach Anspruch 6,
**dadurch gekennzeichnet,**
**dass** das Übertragungssignal ein optisches ist und in ein elektrische Basisband umgesetzt und
das eine Begrenzung des Basisbandes durchgeführt wird.

9. Verfahren nach Anspruch 6,
**dadurch gekennzeichnet,**
**dass** die Datenrate mithilfe von Polarisationsmodendispersion benutzerbezogen eingegrenzt wird.
